# EUROPEAN PATENT SPECIFICATION

(11) **EP 3 314 371 B1**
(45) Date of publication and mention of the grant of the patent: **20.11.2019**
(21) Application number: 16741421.8
(22) Date of filing: 21.06.2016
(51) Int. Cl.: G06F 3/01, G06F 3/0346, G02B 27/01, G06K 9/00

(54) **SYSTEM FOR TRACKING A HANDHELD DEVICE IN AN AUGMENTED AND/OR VIRTUAL REALITY ENVIRONMENT**
SYSTEM ZUM VERFOLGEN EINER TRAGBAREN VORRICHTUNG IN EINER UMGEBUNG DER ERWEITERTEN UND/ODER VIRTUELLEN REALITÄT
SYSTÈME DE POURSUITE D'UN DISPOSITIF PORTATIF DANS UN ENVIRONNEMENT DE RÉALITÉ AUGMENTÉE ET/OU VIRTUELLE

(30) Priority: 24.06.2015 US 201562183907 P; 20.06.2016 US 201615187218
(43) Date of publication of application: 02.05.2018
(73) Proprietor: Google LLC, Mountain View, CA 94043 (US)
(72) Inventor: CHEN, Shiqi, Mountain View, California 94043 (US); GARG, Rahul, Mountain View, California 94043 (US); PLAGEMANN, Christian, Mountain View, California 94043 (US); KAESER, Dominik Philemon, Mountain View, California 94043 (US); GEORGEL, Pierre, Mountain View, California 94043 (US)
(74) Representative: Openshaw & Co.
(86) International application number: PCT/US2016/038540
(87) International publication number: WO 2016/209819

(56) References cited:
- JP-A- 2000 347 128
- US-A1- 2010 039 377
- US-A1- 2015 070 274
- US-A1- 2015 156 196
- KYONG JOON LEE ET AL: "Using a mobile device as an interface tool for HMD-based AR applications", ACE '06 PROCEEDINGS OF THE 2006 ACM SIGCHI INTERNATIONAL CONFERENCE ON ADVANCES IN COMPUTER ENTERTAINMENT TECHNOLOGY , HOLLYWOOD, CA, USA ? JUNE 14 - 16, 2006, ACM, NEW YORK, NY, USA , 14 June 2006 (2006-06-14), XP002690015, DOI: 10.1145/1178823.1178833 ISBN: 978-1-59593-380-5 Retrieved from the Internet: URL:http://dl.acm.org/citation.cfm?id=1178 833 [retrieved on 2013-01-10]

## Description

### FIELD

This relates, generally, to detection and tracking of an electronic device in an augmented and/or virtual reality environment.

### BACKGROUND

An augmented reality (AR) and/or a virtual reality (VR) system may generate a three-dimensional (3D) immersive environment. A user may experience this virtual environment through interaction with various electronic devices, such as, for example, a helmet or other head mounted device including a display, glasses or goggles that a user looks through when viewing a display device, gloves fitted with sensors, external handheld devices that include sensors, and other such electronic devices. Once immersed in the virtual environment, user interaction with the virtual environment may take various forms, such as, for example, physical movement and/or manipulation of the handheld electronic device and/or the head mounted device to interact with, personalize and control the virtual environment.

KYONG JOON LEE ET AL, "Using a mobile device as an interface tool for HMD-based AR applications", ACE '06 PROCEEDINGS OF THE 2006 ACM SIGCHI INTERNATIONAL CONFERENCE ON ADVANCES IN COMPUTER ENTERTAINMENT TECHNOLOGY, JUNE 14 - 16, 2006, suggests that mobile devices may be used as an effective interface for head-mounted-display-based augmented reality applications.

### SUMMARY

The invention is as set out in the claims.

Embodiments in the description that do not fall within the scope of the claims, are not part of the invention.

Aspects of the present invention are set out in the appended independent claims. Variations of these aspects are set out in the appended dependent claims.

In one aspect, a method may include generating and displaying a virtual environment on a display of a first electronic device operating in an ambient environment, tracking movement of a second electronic device in the ambient environment, and translating the tracked movement of the second electronic environment into a corresponding action in the virtual environment generated by the first electronic device.

In another aspect, a system may include a head mounted electronic device, including a housing, a display and lenses included in the housing, a depth camera on the housing and configured to collect position data related to a handheld electronic device operably coupled to the head mounted electronic device, and a processor controlling operation of the second electronic device. The head mounted electronic device may be configured to receive acceleration data and orientation data related to movement of the handheld electronic device from the handheld electronic device, and to determine a location and movement of the handheld electronic device relative to the head mounted electronic device based on the position data collected by the depth camera, and the acceleration data and the orientation data received from the handheld electronic device.

In another aspect, non-transitory computer readable medium may contain instructions that, when executed by a processor of a computing device configured as a head mounted display device, may cause the computing device to generate and display a virtual environment on a display of the head mounted display device operating in an ambient environment, track movement of a handheld electronic device operating in the ambient environment, the handheld electronic device being operably coupled to the head mounted display device, and translate the tracked movement of the handheld electronic device into a corresponding action in the virtual environment generated by the head mounted display device.

The details of one or more implementations are set forth in the accompanying drawings and the description below. Other features will be apparent from the description and drawings, and from the claims.

### BRIEF DESCRIPTION OF THE DRAWINGS

FIG. 1 is an example of a virtual reality system including a head mounted display and a handheld electronic device, in accordance with implementations as described herein;
FIGs. 2A and 2B are perspective views of an example head mounted display, in accordance with implementations as described herein;
FIG. 3 is a block diagram of a head mounted display and a handheld electronic device, in accordance with implementations as described herein;
FIG. 4 is a flowchart of a method of tracking a handheld device in a virtual reality system, in accordance with implementations as described herein;
FIGs. 5A-5C and 6A-6C illustrate a view of a front face of an HMD as captured by a front facing camera of a electronic device at different positions of the electronic device relative to the HMD, in accordance with implementations as described herein; and
FIG. 7 is a flowchart of a method of tracking a handheld device in a virtual reality system, in accordance with implementations as described herein.
FIG. 8 illustrates an example of a computing device and a mobile computing device that can be used to implement the techniques described herein.

### DETAILED DESCRIPTION

A user immersed in an augmented and/or virtual reality environment wearing, for example, a head mounted display (HMD) device may explore the 3D virtual environment and interact with the 3D virtual environment through, for example, physical interaction (such as, for example, hand/arm gestures, head movement, walking and the like) and/or manipulation of the HMD and/or a separate electronic device to experience the virtual environment. For example, in some implementations, the HMD may be paired with a handheld electronic device, such as, for example, a controller, a gyromouse, or other such handheld electronic device. User manipulation of the handheld electronic device paired with the HMD may allow the user to interact with the features in the virtual environment generated by the HMD. In a system and method, in accordance with implementations as described herein, a combination of data collected by, for example, a depth camera with data provided by an inertial measurement unit (IMU) of the handheld electronic device may allow the system to reconstruct and/or track where a user's hand(s) and/or handheld electronic device, or controller, or gyromouse, or electronic device and the like, are in six-degree-of-freedom (6DOF) space.

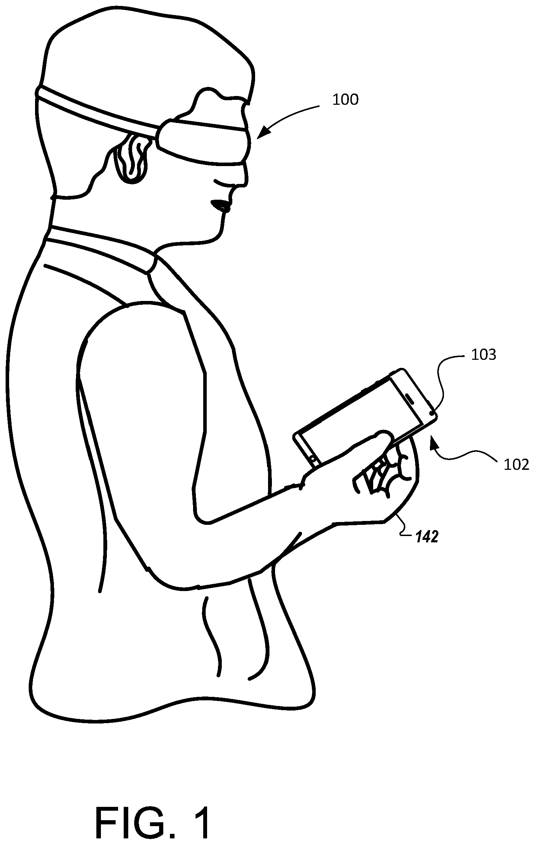

In the example implementation shown in FIG. 1, a user wearing an HMD 100 is holding a portable handheld electronic device 102 in his hand 142. As noted above, the handheld electronic device 102 may be, for example, a controller for use in the virtual environment, a gyromouse, and other electronic device configured to be operably coupled with and communicate with the HMD 100, and that may be detected and tracked so that a six degree of freedom position and orientation of the device may be detected and tracked. In the example shown in FIG. 1, the user is holding the electronic device 102 in his right hand. However, the user may also hold the electronic device 102 in only his left hand, or in both his left hand and his right hand, and still interact with the immersive virtual experience generated by the HMD 100.

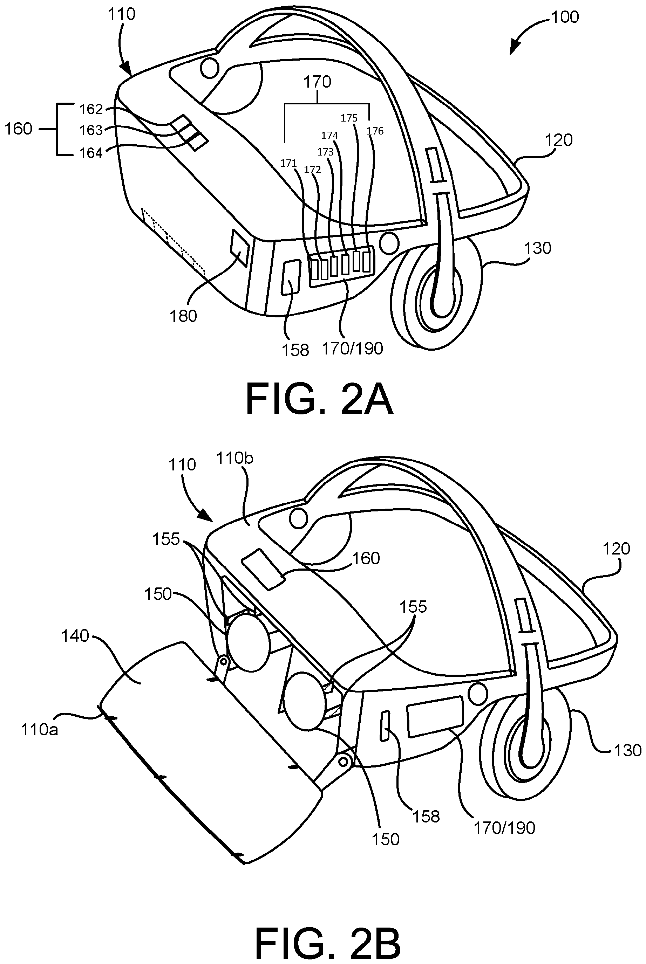

FIGs. 2A and 2B are perspective views of an example HMD, such as, for example, the HMD 100 worn by the user in FIG. 1 to generate and display an augmented and/or virtual reality environment. The HMD 100 may include a housing 110 in which optical components may be received. The housing 110 may be coupled, for example, rotatably coupled and/or removably attachable, to a frame 120 which allows the housing 110 to be mounted or worn on the head of the user. An audio output device 130 may also coupled to the frame 120, and may include, for example, speakers mounted in headphones and coupled on the frame 120.

In FIG. 2B, a front face 110a of the housing 110 is rotated away from a base portion 110b of the housing 110 so that some of the components received in the housing 110 are visible. A display 140 may be mounted on the front face 110a of the housing 110. Lenses 150 may be mounted on mounting structure 155 in the housing 110, between the user's eyes and the display 140 when the front face 110a is in the closed position against the base portion 110b of the housing 110. A position of the lenses 150 may be adjusted by an adjustment device 158, so that the lenses 150 may be aligned with respective optical axes of the user's eyes to provide a relatively wide field of view and relatively short focal length.

The HMD 100 may also include a sensing system 160 including various sensing system devices 162 through 164 and a control system 170 including various control system devices 171 through 176 to facilitate operation of the HMD 100. The control system 170 may also include a processor 190 operably coupled to the components of the control system 170.

The HMD 100 may also include a camera 180 which may capture still and/or moving images of the real world environment. In some implementations, the images captured by the camera 180 may be displayed to the user on the display 140 in a pass through mode, allowing the user to temporarily leave the virtual environment and return to the real world without removing the HMD 100 or otherwise changing the configuration of the HMD 100 to move the housing 110 out of the line of sight of the user.

In some implementations, the camera 180 may be, for example, a depth camera that can determine a distance from the camera 180 on the HMD 100 to, for example, the user's hand(s) 142 holding the electronic device 102, and can update the distance substantially real time. In some implementations, the camera 180, for example, the depth camera as described above, may also collect other information related to objects within the camera's field of view, such as, for example, infrared reflectivity related to objects captured within the field of view, red/green/blue (RGB) information related to objects captured within the field of view, and other such information. In some implementations, it may be difficult for the camera 180 to capture accurate images of the electronic device 102 itself due to, for example, reflective surfaces of the electronic device 102, lighting conditions in a particular augmented and/or virtual reality environment and the like. However, the user using the electronic device 102 for interaction with the virtual environment generated by the HMD 100 is typically holding the electronic device 102 in his/her hand(s) 142. The user's hand(s) 142 may be relatively consistently detected by a depth camera due to the relatively consistent infrared (IR) response of skin. The detection of the IR response of the user's skin by a depth camera may be particularly accurate in the typical distance, or range, between the camera 180 on the HMD 100 and the electronic device 102 held in the user's hand(s) 142 .

Using the data collected by the depth camera, the user's hand(s) 142, and by extension the electronic device 102 held by the user, may be located and/or tracked in a 3D dimensional space. The location of the user's hand(s) 142 holding the electronic device 102 in the 3D space determined in this manner may be combined with orientation data (e.g., which can be represented in or encoded in one or more signals) provided by, for example, an inertial measurement unit (IMU) of the electronic device 102. Data provided by the IMU may include, for example, accelerometer data, gyroscope data, and other orientation data collected by other sensors of the electronic device 102, that may be substantially continuously collected by the IMU. A fusion, or combination, of the data collected by the depth camera with the data provided by the IMU of the electronic device 102 may allow the system to reconstruct and/or track where the user's hand(s) 142 and electronic device 102 are in six-degree-of-freedom (6DOF) space. Tracking of the electronic device 102 in 6DOF space in this manner may translate movement of the electronic device 102 into the desired interaction in the virtual environment generated and displayed by the HMD 100.

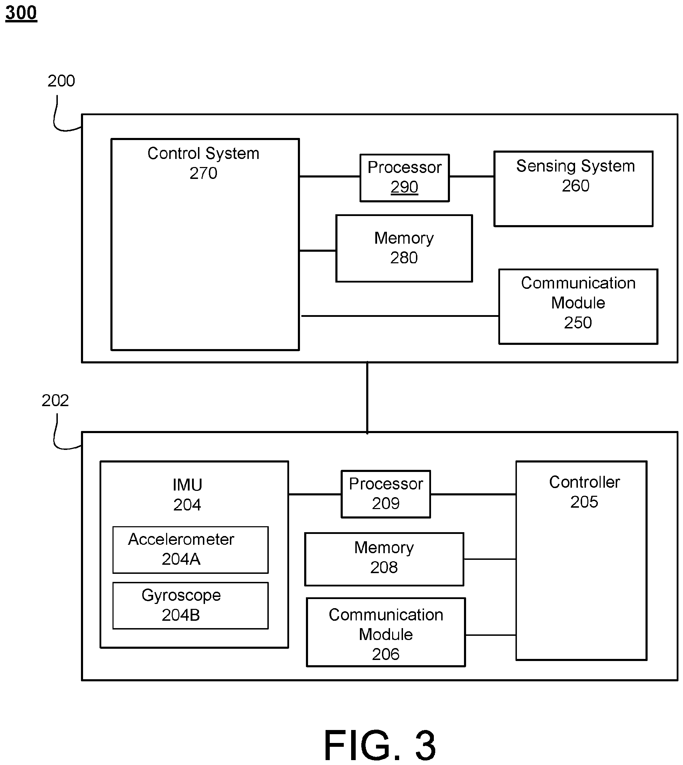

A block diagram of a system for tracking a handheld device in an augmented and/or virtual reality environment is shown in FIG. 3. The system 300 may include a first user electronic device 200 in communication with a second user electronic device 202. The first user electronic device 200 may be, for example an HMD as described above with respect to FIGs. 2A and 2B, generating an augmented and/or virtual reality environment to be displayed to the user, and the second user electronic device 202 may be, for example, a handheld electronic device as described above with respect to FIG. 1, that facilitates user interaction with virtual features in the virtual environment generated and displayed by the HMD. For example, as described above, physical movement of the second (handheld) electronic device 202 in the physical 3D space may be translated into a desired interaction in the virtual environment generated and displayed by the first (head mounted) electronic device 200.

The first electronic device 200 may include a sensing system 260 and a control system 270, which may be similar to the sensing system 160 and the control system 170, respectively, shown in FIGs. 2A and 2B. In the example shown in FIG. 3, the sensing system 260 may include numerous different types of sensors, including, for example, a light sensor 162, a distance/proximity sensor 163, an audio sensor 164 as in the HMD 100 shown in FIGs. 2A and 2B, as well as other sensors and/or different combination(s) of sensors. In some implementations, the light sensor, image sensor and audio sensor may be included in one component, such as, for example, a camera, such as the camera 180 of the HMD 100 shown in FIGs. 2A and 2B. The control system 270 may include numerous different types of devices, including, for example, a power/pause control device 171, audio and video control devices 172 and 173, an optical control device 274, a transition control device 275, as well as other such devices and/or different combination(s) of devices. In some implementations, the sensing system 260 and/or the control system 270 may include more, or fewer, devices, depending on a particular implementation. The elements included in the sensing system 260 and/or the control system 270 can have a different physical arrangement (e.g., different physical location) within, for example, an HMD other than the HMD 100 shown in FIGs. 2A and 2B.

The first electronic device 200 may also include a processor 290 in communication with the sensing system 260 and the control system 270, a memory 280 accessible by, for example, a module of the control system 270, and a communication module 250 providing for communication between the first electronic device 200 and another, external device, such as, for example, the second electronic device 202 paired to the first electronic device 200.

The second electronic device 202 may include a communication module 206 providing for communication between the second electronic device 200 and another, external device, such as, for example, the first electronic device 200 operably coupled to or paired with the second electronic device 202. The second electronic device 202 may include a sensing system 204 including a plurality of different sensors. For example, in some implementations, the sensing system 204 may including an IMU, the IMU including, for example, an accelerometer 204A, a gyroscope 204B, as well as other sensors and/or different combination(s) of sensors. A processor 209 may be in communication with the sensing system 204 and a controller 205 of the second electronic device 202, the controller 205 accessing a memory 208 and controlling overall operation of the second electronic device 202.

As noted above, in an augmented and/or virtual reality system, the user may use movement of the handheld electronic device 102 to interact with the virtual environment, such as, for example, to cause movement of a feature or element in the virtual environment generated and displayed by the HMD 100. For example, the user may be virtually holding a virtual item in the virtual environment. With the electronic device 102 paired with the HMD 100, and the electronic device 102 held in the hand(s) 142 of the user, the system may locate and/or track the 6DOF movement of the electronic device 102 based on a position of the user's hand(s) 142 holding the electronic device 102. The position of the user's hand(s) 142 may be detected by, for example, a depth camera included in the HMD 100, combined with orientation data provided by sensors, such as, for example, data provided by the IMU of the electronic device 102. The system may translate the determined location/position/orientation/movement of the electronic device 102 in the real world environment into corresponding movement of the virtual item held in the virtual world environment, or other action corresponding to the type of movement detected and the virtual objects, elements and the like displayed in the virtual environment such as, for example, menu manipulation, object selection, adjustments in object sizing and placement and the like.

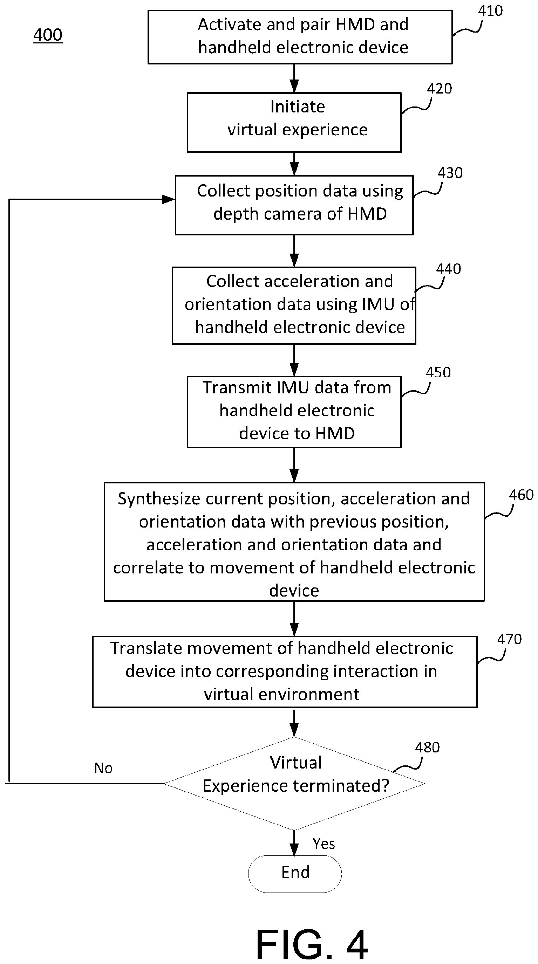

A method 400 of tracking a handheld electronic device in an augmented and/or virtual reality environment, in accordance with implementations as described herein, is shown in FIG. 4. As noted above, the handheld electronic device may be, for example, the electronic device 102 shown in FIG. 1. The electronic device 102 may be operably coupled to or paired with, for example, an HMD 100 as shown in FIGs. 1 and 2A-2B, configured to generate and display an augmented and/or virtual reality environment. The electronic device 102 may be paired with, and/or communicate with, the HMD 100 by, for example, via a wired connection, a wireless connection via for example Wi-Fi or Bluetooth, or other type of connection. After the HMD 100 and the electronic device 102 have been activated and paired, at block 410, and an immersive augmented and/or virtual reality experience has been initiated at block 420, data collection and data synthesis may be carried out by the HMD 100 and the electronic device 102 to locate and/or track the position and/or movement of the electronic device 102 and translate (e.g., correlate, represent) movement of the electronic device 102 into a corresponding interaction in the virtual environment.

A sensor of the HMD 100, for example, sensors included in a camera 180, and in particular, a depth camera of the HMD 100, may collect data related to a position of the user's hand in the physical 3D space in which the system is employed, at block 430. As described above, the user's hand(s) 142 may be detected by the depth camera due to the relatively consistent IR response of the skin. The depth camera may substantially continuously (or periodically, or randomly) collect data related to the position of the user's hand(s) 142 holding the electronic device 102. In some implementations, it may be assumed that the position of the user's hand(s) 142 relative to the electronic device 102 remain relatively consistent, so that the hand position/distance data collected by the depth camera may be consistently translated to a position/distance of the electronic device 102 held by the hand(s) 142.

The electronic device 102 may collect data from sensors of the electronic device 102, such as, for example, movement/acceleration data collected by the accelerometer of the IMU of the electronic device 102, and/or orientation data collected by the gyroscope of the IMU of the electronic device 102, and/or other data collected by other sensors of the IMU and/or of the electronic device 102, and may transmit the collected data to the HMD 100, at blocks 440 and 450. In some implementations, the electronic device 102 may collect this data substantially continuously, and transmit this data to the HMD 100 substantially continuously. In some implementations, the collection of depth camera data carried out by the HMD 100 at block 430 and the collection and transmission of IMU data from the electronic device 102 to the HMD 100 at blocks 440 and 450 may be carried out simultaneously.

The 3D position data collected by the depth camera of the HMD 100 and the acceleration and/or orientation data collected by the IMU of the electronic device 102 and transmitted to the HMD 100 may be processed by the HMD 100 at block 460, and the determined movement of the electronic device 102 may be translated into a corresponding interaction in the virtual environment generated by the HMD 100 at block 470. For example, position and movement and/or orientation data taken at a current point in time may be compared to position and movement and/or orientation data at the previous point in time, to determine a movement trajectory that is continuously updated as data is continuously collected, processed and/or synthesized.

This process may be repeatedly performed until it is determined, at block 480, that the virtual immersive experience has been terminated.

In a system and method, in accordance with implementations described herein, a handheld personal electronic device, such as, for example, a smartphone, a gyromouse, a controller and the like, may be located and/or tracked in an augmented and/or virtual reality environment, without the use of specialized equipment in the facility for detecting and/or tracking the device, or a custom device made only for use with the virtual reality system.

In another implementation, sensor data from a handheld device, for example, accelerometer and gyroscope data collected by an IMU of a electronic device as described above, together with image data collected by, for example, a camera of the electronic device capable of capturing an image of the HMD, may be used to reduce, or simplify, a search space for locating and/or tracking the electronic device relative to the HMD, from a 6DOF space to a 3D space. As the electronic device is held in one, or both hands of the user, the search space may then be further reduced by discretizing the search space to within the somewhat limited motion, or range of motion, of the user's arm/hand(s) relative to the HMD.

For example, as shown in FIG. 1, the electronic device 102 may be held in the user's hand(s) 142, with the HMD 100 in the field of view of a front facing camera 103 of the electronic device 102. Using images of the HMD 100, for example, images captured by a front facing camera of the electronic device 102, and data from the IMU of the electronic device 102, together with IMU data of the HMD 100, a search area for locating and/or tracking the electronic device 102 may be reduced, thus reducing complexity and computational load, and movement of the electronic device 102 relative to the HMD 100 may be effectively located and/or tracked.

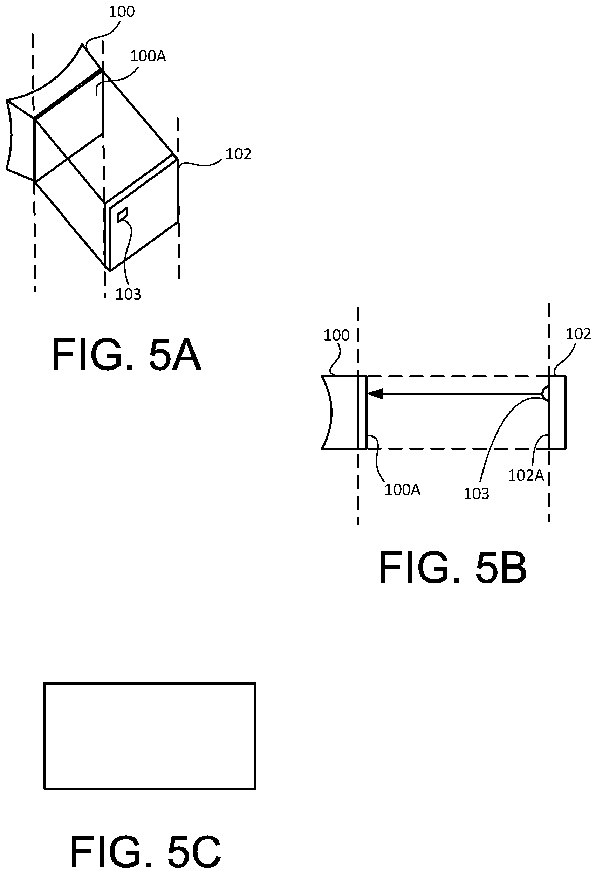

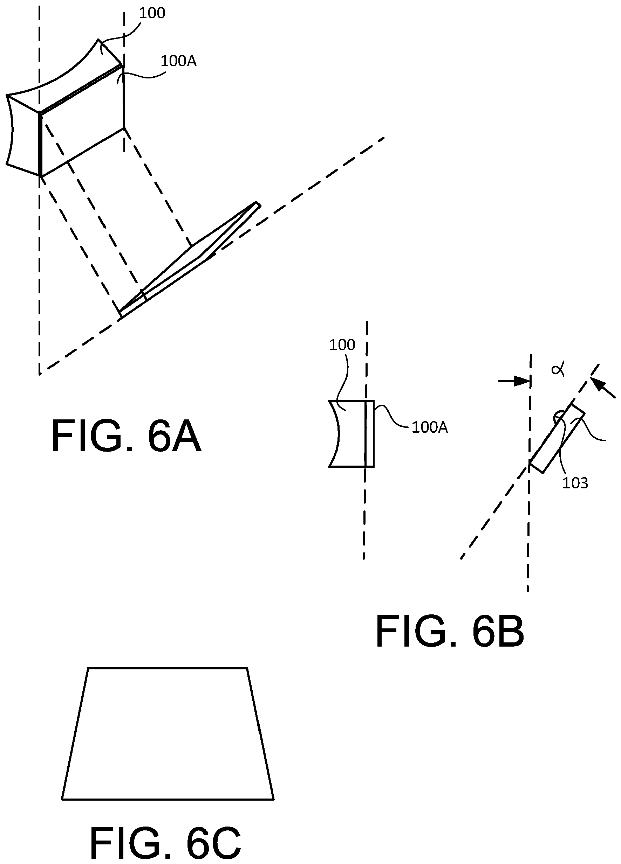

Example orientations of the HMD 100 and the electronic device 102, and an image of the front face of the HMD 100 as viewed by the front facing camera 103 of the electronic device 102, are shown in FIGs. 5A-5C and 6A-6C. Simply for ease of discussion and illustration, the front face 100A of the example HMD 100 shown in FIGs. 5A-5C and 6A-6C is substantially rectangular. However, the front face of the HMD 100 may have various different shapes, depending on the particular implementation of the HMD. In some implementations, the shape of the front face 100A of the HMD may be known to the electronic device 102, for example, as a result of pairing of the HMD 100 and electronic device 102. In some implementations, the shape of the front face 100A of the HMD may be determined by the electronic device 102 in an initialization process, by, for example, capturing an initial image of the front face 100A of the electronic device 102 at a known orientation of the electronic device 102 relative to the HMD 100, positioning the front face100A of the electronic device 102 directly against the front face 100A of the HMD 100 to establish a parallel orientation and then capturing an image of the front face 100A of the HMD 100 at a known distance from the front face 100A, while oriented along a parallel plane of the front face 100A of the HMD 100, and other such manners.

In FIGs. 5A and 5B, the electronic device 102 and the front face 100A of the HMD 100 are positioned spaced apart, and oriented along parallel vertical planes, with a front face 102A of the electronic device 102 facing the front face 100A of the HMD 100, and the front facing camera 103 of the electronic device 102 viewing the front face of the HMD 100 essentially orthogonal to the front face 100A of the HMD 100. In the arrangement of the HMD 100 and electronic device 102 shown in FIGs. 5A and 5B, a view of the front face 100A of the HMD 100 captured by the front facing camera 103 of the electronic device 102 is as shown in FIG. 5C. As shown in FIG. 5C, because the HMD 100 and electronic device 102 are oriented spaced apart and along parallel vertical planes, an image of the front face 100A of the HMD 100 as captured by the front facing camera 103 is also substantially rectangular.

In FIGs. 6A and 6B, the electronic device 102 is spaced apart a known distance from the front face 100A of the HMD 100, but in FIG. 6B the electronic device 102 has been rotated so that the electronic device 102 is now oriented at an angle α with respect to the vertical plane shown in FIG. 5B. In this arrangement, the image of the substantially rectangular front face 100A of the HMD 100 is now trapezoidal, as shown in FIG. 6C, due to the change in orientation of the electronic device 102, and the change in the viewing angle/position/distance of the front facing camera 103 of the electronic device 102, relative to the front face 100A of the HMD 100.

In the arrangements shown in FIGs. 5A-5C and 6A-6C, the known distance between the front face 100A of the HMD 100 and the front face 102A of the electronic device 102 (from which the front facing camera 103 of the electronic device 102 views the front face 100A of the HMD 100) may be relatively consistent, as the electronic device 102 is held in the user's hand(s) 142. For example, the known distance between the front face 100A of the HMD 100 and the front face 102A of the electronic device 102 may fall within a range that is somewhat limited by, for example, the length of the user's arm(s).

In some implementations, an angular position of the electronic device 102 with respect to the HMD 100 may also vary. That is, in the orientations shown in FIGs. 5A-5B and 6A-6B, the electronic device 102 substantially directly faces the HMD 100. However, as the user moves the electronic device 102, for example, to interact in the virtual immersive experience generated by the HMD 100, a position of the electronic device 102 may be offset, and not aligned in parallel with the front face 100A of the HMD 100. In this situation, a range of angular orientations of the electronic device 102 with respect to the HMD 100 may be somewhat limited by a length of the user's arm(s) and a range of motion of the user's arm(s).

Once the shape of the front face 100A of the HMD 100 is known by the electronic device 102, either through initialization, or pairing, or other manner as described above, an image captured by the front facing camera 103 of the electronic device 102 may be examined and compared to the known shape. By comparing the known shape to what is seen by the front facing camera 103 of the electronic device 102, the electronic device 102 may determine a position of the electronic device 102 relative to the HMD 100 based on the transformation of the shape of the front face 100A of the HMD 100 as viewed by the camera 103.

In some implementations, to facilitate the rapid processing of images and continuous determination and update of position and/or movement based on the images captured by the camera 103, the system, for example, the electronic device 102, may build a hierarchy, or pyramid, or a set of templates, of essentially all possible views of the HMD 100 given, for example, the known distance (defined, for example, based on a length of the user's arm holding the electronic device 102) and the known range of angular positions (defined, for example, based on the range of motion of the user's arm holding the electronic device 102). The electronic device 102 may compare the shape of the front face 100A of the HMD 100 that is captured within a field of view of the camera 103 to this collection of images to determine a position of the electronic device 102 relative to the HMD 100. As this process is preformed substantially continuously, the continuous sequential positions may define movement of the electronic device 102.

The various sensors of the HMD 100, for example, an IMU of the HMD 100 including for example an accelerometer and a gyroscope may provide an absolute rotation of the HMD 100 in the space in which the system is received and operated. Similarly, the various sensors of the electronic device 102, for example, the IMU of the electronic device 102 including for example the accelerometer and the gyroscope may provide an absolute rotation of the electronic device 102 in the space in which the system is received and operated. In some implementations, the rotational data from the IMU of the HMD 100 may be transmitted to the electronic device 102. The rotational data from the HMD 100 may be combined with the rotational data from the IMU of the electronic device 102 and the position data of the electronic device 102 relative to the HMD 100 based on the images of the front face of the HMD 100 captured by the front facing camera 103 of the electronic device 102. This combined data may be processed, for example by the electronic device 102, to determine a relative position/rotation/movement of the electronic device 102 and HMD 100. As rotational data is transmitted from the HMD 100 to the electronic device 102 substantially continuously, and the rotational data of the electronic device 102 and image data of the front face of the HMD 100 is collected substantially continuously by the electronic device 102 and processed by the electronic device 102, movement of the electronic device 102 may be determined, tracked and transmitted back to the HMD 100, where the movement is translated into a corresponding interaction in the virtual immersive experience generated by the HMD 100.

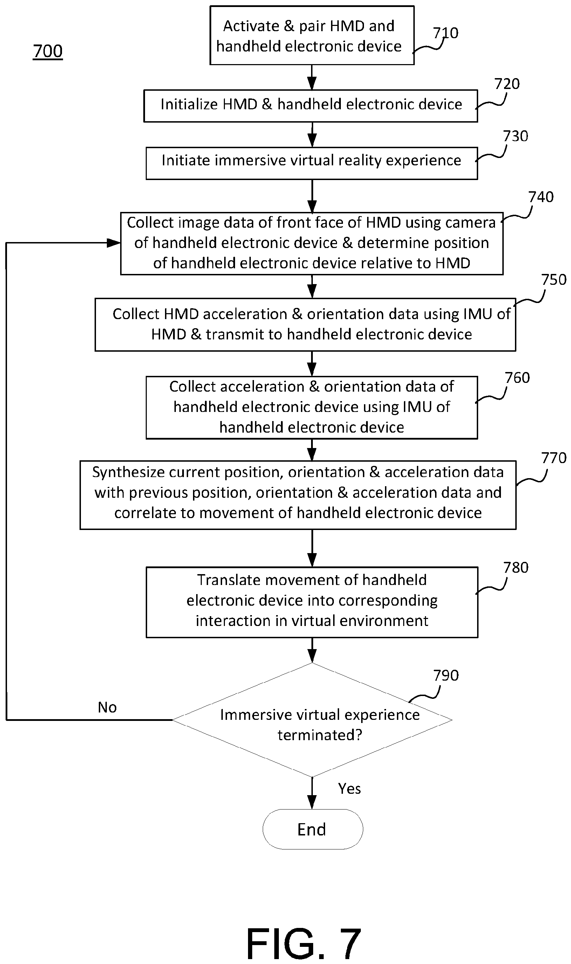

A method 700 of tracking movement of a handheld electronic device in a virtual reality system, in accordance with implementations as broadly described herein, is shown in FIG. 7. As noted above, the handheld electronic device may be, for example, the electronic device 102 including a front facing camera 103 as shown in FIGs. 1, 5A-5C and 6A-6C. The electronic device 102 may be paired with, for example, an HMD 100 as shown in FIGs. 1, 2A-2B, 5A-5C and 6A-6C, configured to generate an immersive virtual environment. The electronic device 102 may be paired with, and/or communicate with, the HMD 100 by, for example, via a wired connection, a wireless connection via for example Wi-Fi or Bluetooth, or other type of connection. As noted above, in some implementations, the pairing may include, for example, initializing the electronic device 102 and the HMD 100, at block 720, to establish a shape of a front face 100A of the HMD 100 for comparison with images captured by the front facing camera 103 of the electronic device. As noted above, in some implementations, the pairing may also include building a plurality of templates from the known image and/or shape of the front face 100A of the HMD 100, the known distance between the HMD 100 and the electronic device 102, and/or the known range of motion of the electronic device 102 relative to the HMD 100.

After the HMD 100 and the electronic device 102 have been activated, paired, and initialized, at blocks 710 and 720, and an immersive virtual reality experience has been initiated at block 730, data collection and data synthesis may be carried out by the HMD 100 and the electronic device 102 as described above to locate and track the position and movement of the electronic device 102 and translate movement of the electronic device 102 into a corresponding interaction in the virtual environment.

A sensor of the electronic device 102, for example, sensors included in a front facing camera 103, may collect data related to images of the front face 100A of the HMD 100, at block 740. The front facing camera's view of the front face 100A of the HMD 100 may be compared to the known shape of the front face 100A of the HMD 100, and to the various shapes at various positions rendered and stored based on the known shape, known distance between the HMD 100 and the electronic device 102, and known range of angular positions of the electronic device 102 relative to the HMD 100, to determine a current position of the electronic device 102 relative to the HMD 100.

The HMD 100 may collect acceleration and/or orientation data of the HMD 100 using, for example, an accelerometer and a gyroscope of the HMD 100, and transmitted to the electronic device 102, at block 750. The electronic device 102 may collect acceleration and orientation data of the electronic device 102 using, for example, an accelerometer and a gyroscope of the electronic device 102, at block 760. In some implementations, the collection of data at blocks 740, 750 and 760 may be done simultaneously, and substantially continuously.

The HMD acceleration and orientation data, the electronic device acceleration and orientation data, and the electronic device 3D position data may be processed by the electronic device 102 at block 770, and the determined movement of the electronic device 102 may be translated into a corresponding interaction in the virtual environment generated by the HMD at block 780. For example, position and movement and/or orientation data taken at a current point in time may be compared to position and movement and/or orientation data at the previous point in time, to determine a movement trajectory that is continuously updated as data is continuously collected, processed and/or synthesized.

This process may be repeatedly performed until it is determined, at block 790, that the virtual immersive experience has been terminated.

In a system and method, as embodied and broadly described herein, a handheld personal electronic device, such as a electronic device, may be located and tracked in a virtual reality environment, without the use of specialized equipment in the facility for detecting and tracking the device, or a custom device made only for use with the virtual reality system.

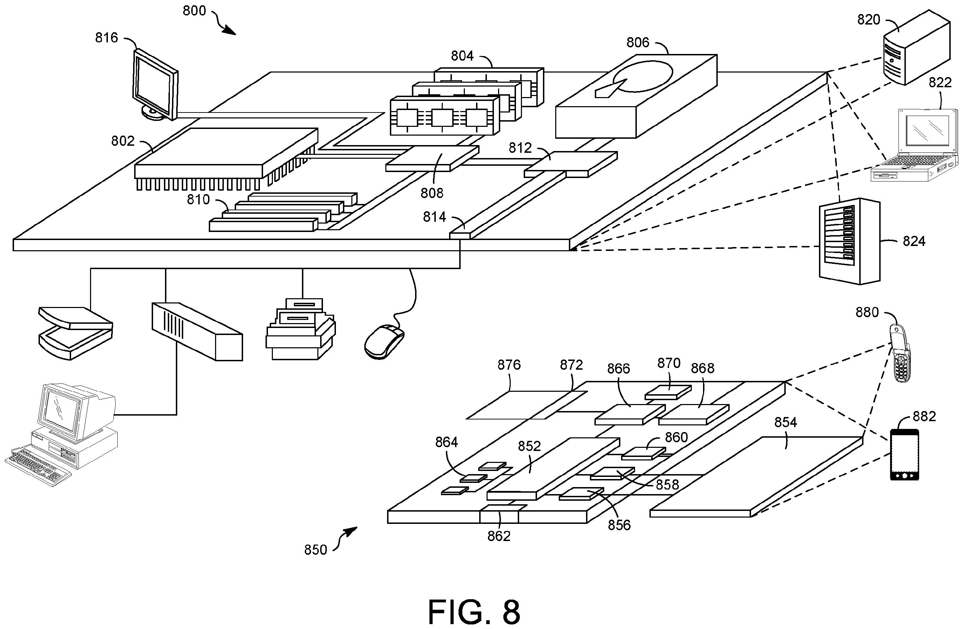

FIG. 8 shows an example of a computer device 800 and a mobile computer device 850, which may be used with the techniques described here. Computing device 800 includes a processor 802, memory 804, a storage device 806, a high-speed interface 808 connecting to memory 804 and high-speed expansion ports 810, and a low speed interface 812 connecting to low speed bus 814 and storage device 806. Each of the components 802, 804, 806, 808, 810, and 812, are interconnected using various busses, and may be mounted on a common motherboard or in other manners as appropriate. The processor 802 can process instructions for execution within the computing device 800, including instructions stored in the memory 804 or on the storage device 806 to display graphical information for a GUI on an external input/output device, such as display 816 coupled to high speed interface 808. In other implementations, multiple processors and/or multiple buses may be used, as appropriate, along with multiple memories and types of memory. Also, multiple computing devices 800 may be connected, with each device providing portions of the necessary operations (e.g., as a server bank, a group of blade servers, or a multiprocessor system).

The memory 804 stores information within the computing device 800. In one implementation, the memory 804 is a volatile memory unit or units. In another implementation, the memory 804 is a non-volatile memory unit or units. The memory 804 may also be another form of computer-readable medium, such as a magnetic or optical disk.

The storage device 806 is capable of providing mass storage for the computing device 800. In one implementation, the storage device 806 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 804, the storage device 806, or memory on processor 802.

The high speed controller 808 manages bandwidth-intensive operations for the computing device 800, while the low speed controller 812 manages lower bandwidth-intensive operations. Such allocation of functions is exemplary only. In one implementation, the high-speed controller 808 is coupled to memory 804, display 816 (e.g., through a graphics processor or accelerator), and to high-speed expansion ports 810, which may accept various expansion cards (not shown). In the implementation, low-speed controller 812 is coupled to storage device 806 and low-speed expansion port 814. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 800 may be implemented in a number of different forms, as shown in the figure. For example, it may be implemented as a standard server 820, or multiple times in a group of such servers. It may also be implemented as part of a rack server system 824. In addition, it may be implemented in a personal computer such as a laptop computer 822. Alternatively, components from computing device 800 may be combined with other components in a mobile device (not shown), such as device 850. Each of such devices may contain one or more of computing device 800, 850, and an entire system may be made up of multiple computing devices 800, 850 communicating with each other.

Computing device 850 includes a processor 852, memory 864, an input/output device such as a display 854, a communication interface 866, and a transceiver 868, among other components. The device 850 may also be provided with a storage device, such as a microdrive or other device, to provide additional storage. Each of the components 850, 852, 864, 854, 866, and 868, are interconnected using various buses, and several of the components may be mounted on a common motherboard or in other manners as appropriate.

The processor 852 can execute instructions within the computing device 850, including instructions stored in the memory 864. The processor may be implemented as a chipset of chips that include separate and multiple analogue and digital processors. The processor may provide, for example, for coordination of the other components of the device 850, such as control of user interfaces, applications run by device 850, and wireless communication by device 850.

Processor 852 may communicate with a user through control interface 858 and display interface 856 coupled to a display 854. The display 854 may be, for example, a TFT LCD (Thin-Film-Transistor Liquid Crystal Display) or an OLED (Organic Light Emitting Diode) display, or other appropriate display technology. The display interface 856 may comprise appropriate circuitry for driving the display 854 to present graphical and other information to a user. The control interface 858 may receive commands from a user and convert them for submission to the processor 852. In addition, an external interface 862 may be provide in communication with processor 852, so as to enable near area communication of device 850 with other devices. External interface 862 may provide, for example, for wired communication in some implementations, or for wireless communication in other implementations, and multiple interfaces may also be used.

The memory 864 stores information within the computing device 850. The memory 864 can be implemented as one or more of a computer-readable medium or media, a volatile memory unit or units, or a non-volatile memory unit or units. Expansion memory 874 may also be provided and connected to device 850 through expansion interface 872, which may include, for example, a SIMM (Single In Line Memory Module) card interface. Such expansion memory 874 may provide extra storage space for device 850, or may also store applications or other information for device 850. Specifically, expansion memory 874 may include instructions to carry out or supplement the processes described above, and may include secure information also. Thus, for example, expansion memory 874 may be provide as a security module for device 850, and may be programmed with instructions that permit secure use of device 850. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 864, expansion memory 874, or memory on processor 852, that may be received, for example, over transceiver 868 or external interface 862.

Device 850 may communicate wirelessly through communication interface 866, which may include digital signal processing circuitry where necessary. Communication interface 866 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 868. In addition, short-range communication may occur, such as using a Bluetooth, Wi-Fi, or other such transceiver (not shown). In addition, GPS (Global Positioning System) receiver module 870 may provide additional navigation- and location-related wireless data to device 850, which may be used as appropriate by applications running on device 850.

Device 850 may also communicate audibly using audio codec 860, which may receive spoken information from a user and convert it to usable digital information. Audio codec 860 may likewise generate audible sound for a user, such as through a speaker, e.g., in a handset of device 850. Such sound may include sound from voice telephone calls, may include recorded sound (e.g., voice messages, music files, etc.) and may also include sound generated by applications operating on device 850.

The computing device 850 may be implemented in a number of different forms, as shown in the figure. For example, it may be implemented as a cellular telephone 880. It may also be implemented as part of a smart phone 882, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 8 can include sensors that interface with a virtual reality (VR headset/HMD device 890). For example, one or more sensors included on a computing device 850 or other computing device depicted in FIG. 8, can provide input to VR headset 890 or in general, provide input to a VR space. The sensors can include, but are not limited to, a touchscreen, accelerometers, gyroscopes, pressure sensors, biometric sensors, temperature sensors, humidity sensors, and ambient light sensors. The computing device 850 can use the sensors to determine an absolute position and/or a detected rotation of the computing device in the VR space that can then be used as input to the VR space. For example, the computing device 850 may be incorporated into the VR space as a virtual object, such as a controller, a laser pointer, a keyboard, a weapon, etc. Positioning of the computing device/virtual object by the user when incorporated into the VR space can allow the user to position the computing device so as to view the virtual object in certain manners in the VR space. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 850 can be used as input to the VR space. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 850 when the computing device is incorporated into the VR space can cause a particular action to occur in the VR space.

In some implementations, a touchscreen of the computing device 850 can be rendered as a touchpad in VR space. A user can interact with the touchscreen of the computing device 850. The interactions are rendered, in VR headset 890 for example, as movements on the rendered touchpad in the VR space. The rendered movements can control virtual objects in the VR space.

In some implementations, one or more output devices included on the computing device 850 can provide output and/or feedback to a user of the VR headset 890 in the VR space. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 850 may appear as another object in a computer-generated, 3D environment. Interactions by the user with the computing device 850 (e.g., rotating, shaking, touching a touchscreen, swiping a finger across a touch screen) can be interpreted as interactions with the object in the VR space. In the example of the laser pointer in a VR space, the computing device 850 appears as a virtual laser pointer in the computer-generated, 3D environment. As the user manipulates the computing device 850, the user in the VR space sees movement of the laser pointer. The user receives feedback from interactions with the computing device 850 in the VR environment on the computing device 850 or on the VR headset 890.

In some implementations, a computing device 850 may include a touchscreen. For example, a user can interact with the touchscreen in a particular manner that can mimic what happens on the touchscreen with what happens in the VR space. For example, a user may use a pinching-type motion to zoom content displayed on the touchscreen. This pinching-type motion on the touchscreen can cause information provided in the VR space to be zoomed. In another example, the computing device may be rendered as a virtual book in a computer-generated, 3D environment. In the VR space, the pages of the book can be displayed in the VR space and the swiping of a finger of the user across the touchscreen can be interpreted as turning/flipping a page of the virtual book. As each page is turned/flipped, in addition to seeing the page contents change, the user may be provided with audio feedback, such as the sound of the turning of a page in a book.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the VR space to control objects in the VR space.

Computing device 800 is intended to represent various forms of digital computers and devices, including, but not limited to laptops, desktops, workstations, personal digital assistants, servers, blade servers, mainframes, and other appropriate computers. Computing device 850 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

A number of embodiments have been described. Nevertheless, it will be understood that various modifications may be made without departing from the spirit and scope of the specification.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or subcombinations of the functions, components and/or features of the different implementations described.

According to an exemplary embodiment, there is provided a system for tracking a first electronic device, such as a handheld electronic device, in a virtual reality environment generated by a second electronic device, such as a head mounted display may include the fusion of data collected by sensors of the electronic device with data collected by sensors of the head mounted display, together with data collected by a front facing camera of the electronic device related to the front face of the head mounted display.

## Claims

1. A method (400), comprising:
generating and displaying (420) a virtual environment on a display of a head mounted electronic device operating in an ambient environment;
tracking movement of a handheld electronic device in the ambient environment, including:
generating (430), by a depth camera of the head mounted electronic device, infrared signals;
collecting (440), by the head mounted electronic device, position data of the handheld electronic device relative to the head mounted electronic device based on responses to the infrared signals generated by the depth camera of the head mounted electronic device;
collecting image data featuring the head mounted electronic device that is captured by a camera of the handheld electronic device;
receiving (450), by the head mounted electronic device, acceleration data of the handheld electronic device collected by an accelerometer of the handheld electronic device and orientation data of the handheld electronic device collected by a gyroscope of the handheld electronic device; and
processing (460), by the head mounted electronic device, the position data, the acceleration data and the orientation data to determine a six-degree-of-freedom - 6DOF - position of the handheld electronic device, including using the image data to reduce a search space for locating the handheld electronic device relative to the head mounted electronic device; and
translating (470) the tracked movement of the handheld electronic device into a corresponding action in the virtual environment displayed by the head mounted electronic device.

2. The method (400) of claim 1, wherein processing (460), by the head mounted electronic device, the position data, the acceleration data and the orientation data to determine the 6DOF position of the handheld electronic device includes:
combining, by the head mounted electronic device, the position data collected by the depth camera of the head mounted electronic device, with the acceleration data and the orientation data received from the handheld electronic device to determine a current position, a current acceleration and a current orientation of the handheld electronic device; and
comparing the current position, the current acceleration and the current orientation of the handheld electronic device to a previous position, a previous acceleration and a previous orientation of the handheld electronic device, respectively, to track movement of the handheld electronic device.

3. The method (400) of claim 2, wherein the handheld electronic device is a handheld controller operably coupled to the head mounted electronic device.

4. The method (400) of claim 1, wherein tracking movement of the handheld electronic device includes:
initializing a position between a front face of the head mounted electronic device and a front face of the handheld electronic device and capturing an initial image of the front face of the head mounted electronic device;
capturing a current image of the front face of the head mounted electronic device with a front facing camera of the handheld electronic device;
comparing the current image of the front face of the head mounted electronic device to the initial image of the front face of the head mounted electronic device; and
determining a position and an orientation of the handheld electronic device relative to the head mounted electronic device based on the comparison.

5. The method (400) of claim 4, wherein comparing the current image of the front face of the head mounted electronic device to the initial image of the front face of the head mounted electronic device includes:
comparing an initial contour of the head mounted electronic device detected in the initial image to a current contour of the head mounted electronic device detected in the current image; and
determining at least one of a change in position or a change in orientation of the handheld electronic device relative to the head mounted electronic device based on the comparison.

6. The method (400) of claim 4, wherein tracking movement of the handheld electronic device also includes:
combining, by a processor of the head mounted electronic device, the determined position of the handheld electronic device relative to the head mounted electronic device with acceleration data of the handheld electronic device from an accelerometer of the handheld electronic device and orientation data of the handheld electronic device from a gyroscope of the handheld electronic device to determine a current position, acceleration and orientation of the handheld electronic device; and
comparing the current position, acceleration and orientation of the handheld electronic device to a previous position, acceleration and orientation of the handheld electronic device to track movement of the handheld electronic device.

7. The method (400) of claim 1, wherein tracking movement of the handheld electronic device includes:
initializing a position between a front face of the head mounted electronic device and a front face of the handheld electronic device and capturing an initial image of the front face of the handheld electronic device;
capturing a current image of the front face of the handheld electronic device with a camera of the head mounted electronic device;
comparing the current image of the front face of the handheld electronic device to the initial image of the front face of the handheld electronic device; and
determining a position and an orientation of the handheld electronic device relative to the head mounted electronic device based on the comparison.

8. The method (400) of claim 7, wherein comparing the current image of the front face of the handheld electronic device to the initial image of the front face of the handheld electronic device includes:
comparing an initial contour of the handheld electronic device detected in the initial image to a current contour of the handheld electronic device detected in the current image; and
determining at least one of a change in position or a change in orientation of the handheld electronic device relative to the head mounted electronic device based on the comparison.

9. A system (300), comprising:
a handheld electronic device (202)
a head mounted electronic device (100, 200), including:
a housing (110);
a display (140) and lenses (150) included in the housing (110);
a depth camera (180) on the housing (110), wherein the depth camera is configured to generate infrared signals, and to collect position data related to the handheld electronic device (202) operably coupled to the head mounted electronic device (100, 200), based on responses to the infrared signals generated by the depth camera (180) of the head mounted electronic device (100, 200); and
a processor (290) controlling operation of the head mounted electronic device (100, 200),
wherein the head mounted electronic device (100, 200) is configured to:
receive, from the handheld electronic device (202), image data featuring the head mounted electronic device (100, 200) captured by a camera of the handheld electronic device;
receive acceleration data, collected by an accelerometer (204A) of the handheld electronic device (202), and orientation data, collected by a gyroscope (204B) of the handheld electronic device (202), from the handheld electronic device (202) related to movement of the handheld electronic device (202), and
to process the position data collected by the depth camera (180), and the acceleration data and the orientation data received from the handheld electronic device (202), to determine a six-degree-of-freedom - 6DOF - position of the handheld electronic device (202), including to use the image data received from the handheld electronic device (202) to reduce a search space for locating the handheld electronic device relative to the head mounted electronic device (100, 200).

10. The system (300) of claim 9, wherein the processor (290) is configured to compare a current position, a current acceleration and a current orientation of the handheld electronic device (202) to a previous position, a previous acceleration and a previous orientation, respectively, of the handheld electronic device (202), and to track movement of the handheld electronic device (202) based on the comparison.

11. The system (300) of claim 9, wherein the processor (290) is configured to:
compare an initial image of a front face of the head mounted electronic device (100, 200), captured by the handheld electronic device (202), to a current image of the front face of the head mounted electronic device (100, 200), captured by the handheld electronic device (202), and
to determine a position and an orientation of the handheld electronic device (202) relative to the head mounted electronic device (100, 200) based on the comparison.

12. The system (300) of claim 11, wherein, in comparing the captured image of the front face of the head mounted display device (100, 200) to the initial image of the front face of the head mounted electronic device (100, 200), the processor (290) is configured to:
compare an initial contour of the head mounted electronic device (100, 200) detected in the initial image to a current contour of the head mounted electronic device (100, 200) detected in the captured image; and
determine at least one of a change in position or a change in orientation of the handheld electronic device (202) relative to the head mounted electronic device (100, 200) based on the comparison.

13. The system (300) of claim 9, wherein the processor (290) is configured to
compare an initial image of a front face of the handheld electronic device (202), captured by the head mounted electronic device (100, 200), to a current image of the front face of the handheld electronic device (202), captured by the head mounted electronic device (100, 200), and
to determine a position and an orientation of the handheld electronic device (202) relative to the head mounted electronic device (100, 200) based on the comparison.

14. The system (300) of claim 13, wherein, in comparing the captured image of the front face of the handheld electronic device (202) to the initial image of the front face of the handheld electronic device (202), the processor (290) is configured to:
compare an initial contour of the handheld electronic device (202) detected in the initial image to a current contour of the handheld electronic device (202) detected in the captured image; and
determine at least one of a change in position or a change in orientation of the handheld electronic device (202) relative to the head mounted electronic device (100, 200) based on the comparison.

15. A non-transitory computer readable medium (804) containing instructions that, when executed by a processor (802) of a computing device configured as a head mounted display device (100, 200), cause the computing device to perform the method of any one of claims 1 to 8.

## Patentansprüche

1. Verfahren (400), umfassend:
Erzeugen und Anzeigen (420) einer virtuellen Umgebung auf einer Anzeige eines am Kopf befestigten elektronischen Geräts, das in einer umliegenden Umgebung betrieben wird;
Verfolgen einer Bewegung eines tragbaren elektronischen Geräts in der umliegenden Umgebung, beinhaltend:
Erzeugen (430), durch eine Tiefenkamera des am Kopf befestigten elektronischen Geräts, von Infrarotsignalen;
Erfassen (440), durch das am Kopf befestigte elektronische Gerät, von Positionsdaten des tragbaren elektronischen Geräts in Bezug auf das am Kopf befestigte elektronische Gerät basierend auf Reaktionen auf die durch die Tiefenkamera des am Kopf befestigten elektronischen Geräts erzeugten Infrarotsignale;
Erfassen von Bilddaten, die das am Kopf befestigte elektronische Gerät zeigen, die durch eine Kamera des tragbaren elektronischen Geräts aufgenommen werden;
Empfangen (450), durch das am Kopf befestigte elektronische Gerät, von Beschleunigungsdaten des tragbaren elektronischen Geräts, die durch einen Beschleunigungssensor des tragbaren elektronischen Geräts erfasst werden, und von Ausrichtungsdaten des tragbaren elektronischen Geräts, die durch ein Gyroskop des tragbaren elektronischen Geräts erfasst werden; und
Verarbeiten (460), durch das am Kopf befestigte elektronische Gerät, der Positionsdaten, der Beschleunigungsdaten und der Ausrichtungsdaten, um eine Position mit sechs Freiheitsgraden (6DOF) des tragbaren elektronischen Geräts zu ermitteln, einschließlich einer Nutzung der Bilddaten, um einen Suchraum zum Orten des tragbaren elektronischen Geräts in Bezug auf das am Kopf befestigte elektronische Gerät zu verkleinern; und
Übersetzen (470) der verfolgten Bewegung des tragbaren elektronischen Geräts in eine entsprechende Aktion in der virtuellen Umgebung, die durch das am Kopf befestigte elektronische Gerät angezeigt wird.

2. Verfahren (400) nach Anspruch 1, wobei das Verarbeiten (460), durch das am Kopf befestigte elektronische Gerät, der Positionsdaten, der Beschleunigungsdaten und der Ausrichtungsdaten zum Ermitteln der 6DOF-Position des tragbaren elektronischen Geräts Folgendes beinhaltet:
Kombinieren, durch das am Kopf befestigte elektronische Gerät, der durch die Tiefenkamera des am Kopf befestigten elektronischen Geräts erfassten Positionsdaten mit den von dem tragbaren elektronischen Geräts empfangenen Beschleunigungsdaten und Ausrichtungsdaten, um eine aktuelle Position, eine aktuelle Beschleunigung und eine aktuelle Ausrichtung der tragbaren elektronischen Geräts zu ermitteln; und
jeweiliges Vergleichen der aktuellen Position, der aktuellen Beschleunigung und der aktuellen Ausrichtung des tragbaren elektronischen Geräts mit einer vorherigen Position, einer vorherigen Beschleunigung und einer vorherigen Ausrichtung des tragbaren elektronischen Geräts, um eine Bewegung des tragbaren elektronischen Geräts zu verfolgen.

3. Verfahren (400) nach Anspruch 2, wobei das tragbare elektronische Gerät ein tragbarer Controller ist, der mit dem am Kopf befestigten elektronischen Gerät betriebsfähig verbunden ist.

4. Verfahren (400) nach Anspruch 1, wobei das Verfolgen der Bewegung des tragbaren elektronischen Geräts Folgendes beinhaltet:
Initialisieren einer Position zwischen einer Vorderseite des am Kopf befestigten elektronischen Geräts und einer Vorderseite des tragbaren elektronischen Geräts und Aufnehmen eines anfänglichen Bildes der Vorderseite des am Kopf befestigten elektronischen Geräts;
Aufnehmen eines aktuellen Bildes der Vorderseite des am Kopf befestigten elektronischen Geräts mit einer nach vorne gerichteten Kamera des tragbaren elektronischen Geräts;
Vergleichen des aktuellen Bildes der Vorderseite des am Kopf befestigten elektronischen Geräts mit dem anfänglichen Bild der Vorderseite des am Kopf befestigten elektronischen Geräts; und
Ermitteln einer Position und einer Ausrichtung des tragbaren elektronischen Geräts in Bezug auf das am Kopf befestigte elektronische Gerät basierend auf dem Vergleich.

5. Verfahren (400) nach Anspruch 4, wobei das Vergleichen des aktuellen Bildes der Vorderseite des am Kopf befestigten elektronischen Geräts mit dem anfänglichen Bild der Vorderseite des am Kopf befestigten elektronischen Geräts Folgendes beinhaltet:
Vergleichen einer anfänglichen Kontur des am Kopf befestigten elektronischen Geräts, die in dem anfänglichen Bild erkannt wird, mit einer aktuellen Kontur des am Kopf befestigten elektronischen Geräts, die in dem aktuellen Bild erkannt wird; und
Ermitteln zumindest einer von einer Veränderung der Position oder einer Änderung der Ausrichtung des tragbaren elektronischen Geräts in Bezug auf das am Kopf befestigte elektronische Gerät basierend auf dem Vergleich.

6. Verfahren (400) nach Anspruch 4, wobei das Verfolgen der Bewegung des tragbaren elektronischen Geräts zudem Folgendes beinhaltet:
Kombinieren, durch einen Prozessor des am Kopf befestigten elektronischen Geräts, der ermittelten Position des tragbaren elektronischen Geräts in Bezug auf das am Kopf befestigte elektronische Gerät mit Beschleunigungsdaten des tragbaren elektronischen Geräts von einem Beschleunigungssensor des tragbaren elektronischen Geräts und mit Ausrichtungsdaten des tragbaren elektronischen Geräts von einem Gyroskop des tragbaren elektronischen Geräts, um eine aktuelle Position, Beschleunigung und Ausrichtung des tragbaren elektronischen Geräts zu ermitteln; und
Vergleichen der aktuellen Position, Beschleunigung und Ausrichtung des tragbaren elektronischen Geräts mit einer vorherigen Position, Beschleunigung und Ausrichtung des tragbaren elektronischen Geräts, um eine Bewegung des tragbaren elektronischen Geräts zu verfolgen.

7. Verfahren (400) nach Anspruch 1, wobei das Verfolgen der Bewegung des tragbaren elektronischen Geräts Folgendes beinhaltet:
Initialisieren einer Position zwischen einer Vorderseite des am Kopf befestigten elektronischen Geräts und einer Vorderseite des tragbaren elektronischen Geräts und Aufnehmen eines anfänglichen Bildes der Vorderseite des tragbaren elektronischen Geräts;
Aufnehmen eines aktuellen Bildes der Vorderseite des tragbaren elektronischen Geräts mit einer Kamera des am Kopf befestigten elektronischen Geräts;
Vergleichen des aktuellen Bildes der Vorderseite des tragbaren elektronischen Geräts mit dem anfänglichen Bild der Vorderseite des tragbaren elektronischen Geräts; und
Ermitteln einer Position und einer Ausrichtung des tragbaren elektronischen Geräts in Bezug auf das am Kopf befestigte elektronische Gerät basierend auf dem Vergleich.

8. Verfahren (400) nach Anspruch 7, wobei das Vergleichen des aktuellen Bildes der Vorderseite des tragbaren elektronischen Geräts mit dem anfänglichen Bild der Vorderseite des tragbaren elektronischen Geräts Folgendes beinhaltet:
Vergleichen einer anfänglichen Kontur des tragbaren elektronischen Geräts, die in dem anfänglichen Bild erkannt wird, mit einer aktuellen Kontur des tragbaren elektronischen Geräts, die in dem aktuellen Bild erkannt wird; und
Ermitteln zumindest einer von einer Änderung der Position oder einer Änderung der Ausrichtung des tragbaren elektronischen Geräts in Bezug auf das am Kopf befestigte elektronische Gerät basierend auf dem Vergleich.

9. System (300), umfassend:
ein tragbares elektronisches Gerät (202);
ein am Kopf befestigtes elektronisches Gerät (100, 200), beinhaltend:
ein Gehäuse (110);
eine Anzeige (140) und Linsen (150), die in dem Gehäuse (110) beinhaltet sind;
eine Tiefenkamera (180) an dem Gehäuse (110), wobei die Tiefenkamera konfiguriert ist, Infrarotsignale zu erzeugen und Positionsdaten, die das tragbare elektronische Gerät (202), das mit dem am Kopf befestigten elektronischen Gerät (100, 200) betriebsfähig verbunden ist, betreffen, basierend auf den durch die Tiefenkamera (180) des am Kopf befestigten elektronischen Geräts (100, 200) erzeugten Infrarotsignalen zu erfassen; und
einen Prozessor (290), der den Betrieb des am Kopf befestigten elektronischen Geräts (100, 200) steuert,
wobei das am Kopf befestigte elektronische Gerät (100, 200) dafür konfiguriert ist:
Bilddaten, die das am Kopf befestigte elektronische Gerät (100, 200) zeigen, aufgenommen durch eine Kamera des tragbaren elektronischen Geräts, von dem tragbaren elektronischen Gerät (202) zu empfangen;
Beschleunigungsdaten, die durch einen Beschleunigungssensor (204A) des tragbaren elektronischen Geräts (202) erfasst werden, und Ausrichtungsdaten, die durch ein Gyroskop (204B) des tragbaren elektronischen Geräts (202) erfasst werden, welche eine Bewegung des tragbaren elektronischen Geräts (202) betreffen, von dem tragbaren elektronischen Gerät (202) zu empfangen, und
die durch die Tiefenkamera (180) erfassten Positionsdaten und die von dem tragbaren elektronischen Gerät (202) empfangenen Beschleunigungsdaten und Ausrichtungsdaten zu verarbeiten, um eine Position mit sechs Freiheitsgraden (6DOF) des tragbaren elektronischen Geräts (202) zu ermitteln, was beinhaltet, die von dem tragbaren elektronischen Gerät (202) empfangenen Bilddaten, zu nutzen, um einen Suchraum zum Orten des tragbaren elektronischen Geräts in Bezug auf das am Kopf befestigte elektronische Gerät (100, 200) zu verkleinern.

10. System (300) nach Anspruch 9, wobei der Prozessor (290) konfiguriert ist, eine aktuelle Position, eine aktuelle Beschleunigung und eine aktuelle Ausrichtung des tragbaren elektronischen Geräts (202) jeweils mit einer vorherigen Position, einer vorherigen Beschleunigung und einer vorherigen Ausrichtung des tragbaren elektronischen Geräts (202) zu vergleichen, um eine Bewegung des tragbaren elektronischen Geräts (202) basierend auf dem Vergleich zu verfolgen.

11. System (300) nach Anspruch 9, wobei der Prozessor (290) konfiguriert ist:
ein anfängliches Bild einer Vorderseite des am Kopf befestigten elektronischen Geräts (100, 200), das durch das tragbare elektronische Gerät (202) aufgenommen wurde, mit einem aktuellen Bild der Vorderseite des am Kopf befestigten elektronischen Geräts (100, 200), das durch das tragbare elektronische Gerät (202) aufgenommen wird, zu vergleichen, und
eine Position und eine Ausrichtung des tragbaren elektronischen Geräts (202) in Bezug auf das am Kopf befestigte elektronische Gerät (100, 200) basierend auf dem Vergleich zu ermitteln.

12. System (300) nach Anspruch 11, wobei der Prozessor (290), beim Vergleichen des aufgenommenen Bildes der Vorderseite des am Kopf befestigten Anzeigegeräts (100, 200) mit dem anfänglichen Bild der Vorderseite des am Kopf befestigten elektronischen Geräts (100, 200) konfiguriert ist:
eine anfängliche Kontur des am Kopf befestigten elektronischen Geräts (100, 200), die in dem anfänglichen Bild erkannt wird, mit einer aktuellen Kontur des am Kopf befestigten elektronischen Geräts (100, 200), die in dem aufgenommenen Bild erkannt wird, zu vergleichen; und
zumindest eine von einer Änderung der Position oder einer Änderung der Ausrichtung des tragbaren elektronischen Geräts (202) in Bezug auf das am Kopf befestigte elektronische Gerät (100, 200) basierend auf dem Vergleich zu ermitteln.

13. System (300) nach Anspruch 9, wobei der Prozessor (290) konfiguriert ist,
ein anfängliches Bild einer Vorderseite des tragbaren elektronischen Geräts (202), das durch das am Kopf befestigte elektronische Gerät (100, 200) aufgenommen wurde, mit einem aktuellen Bild der Vorderseite des tragbaren elektronischen Geräts (202), das durch das am Kopf befestigte elektronische Gerät (100, 200) aufgenommen wurde, zu vergleichen, und
eine Position und eine Ausrichtung des am Kopf befestigten elektronischen Geräts (100, 200) in Bezug auf das tragbare elektronische Gerät (202) basierend auf dem Vergleich zu ermitteln.

14. System (300) nach Anspruch 13, wobei der Prozessor (290), beim Vergleichen des aufgenommenen Bildes der Vorderseite des tragbaren elektronischen Geräts (202) mit dem anfänglichen Bild der Vorderseite des tragbaren elektronischen Geräts (202), konfiguriert ist:
eine anfängliche Kontur des tragbaren elektronischen Geräts (202), die in dem anfänglichen Bild erkannt wird, mit einer aktuellen Kontur des tragbaren elektronischen Geräts (202), die in dem aufgenommenen Bild erkannt wird, zu vergleichen; und
zumindest eine von einer Änderung der Position oder einer Änderung der Ausrichtung des tragbaren elektronischen Geräts (202) in Bezug auf das am Kopf befestigte elektronische Gerät (100, 200) basierend auf dem Vergleich zu ermitteln.

15. Nicht-flüchtiges computerlesbares Medium (804), das Anweisungen enthält, die, bei Ausführung durch einen Prozessor (802) eines Computergeräts, das als ein am Kopf befestigtes Anzeigegerät (100, 200) konfiguriert ist, das Computergerät veranlassen, das Verfahren nach einem der Ansprüche 1 bis 8 durchzuführen.

## Revendications

1. Procédé (400), comprenant :
la génération et l'affichage (420) d'un environnement virtuel sur un affichage d'un dispositif électronique monté sur la tête fonctionnant dans un environnement ambiant ;
le suivi du mouvement d'un dispositif électronique portable dans l'environnement ambiant, incluant :
la génération (430), par une caméra de profondeur du dispositif électronique monté sur la tête, de signaux infrarouges ;
la collecte (440), par le dispositif électronique monté sur la tête, des données de position du dispositif électronique portable par rapport au dispositif électronique monté sur la tête, sur la base des réponses aux signaux infrarouges générés par la caméra de profondeur du dispositif électronique monté sur la tête ;
la collecte de données d'image caractérisant le dispositif électronique monté sur la tête qui est capturé par une caméra du dispositif électronique portable ;
la réception (450), par le dispositif électronique monté sur la tête, des données d'accélération du dispositif électronique portable collectées par un accéléromètre du dispositif électronique portable et des données d'orientation du dispositif électronique portable collecté par un gyroscope du dispositif électronique portable ; et
le traitement (460), par le dispositif électronique monté sur la tête, des données de position, des données d'accélération et des données d'orientation pour la détermination d'une position de six degrés de liberté (6 DOF), du dispositif électronique portable, incluant l'utilisation des données d'image pour réduire un espace de recherche pour localiser le dispositif électronique portable par rapport au dispositif électronique monté sur la tête ; et
la translation (470) du mouvement suivi du dispositif électronique portable dans une action correspondante dans l'environnement virtuel affiché par le dispositif électronique monté sur la tête.

2. Procédé (400) selon la revendication 1, dans lequel le traitement (460), par le dispositif électronique monté sur la tête, des données de position, des données d'accélération et des données d'orientation pour déterminer la position 6 DOF du dispositif électronique portable inclut :
la combinaison, par le dispositif électronique monté sur la tête, des données de position collectées par la caméra de profondeur du dispositif électronique monté sur la tête, avec les données d'accélération et les données d'orientation reçues du dispositif électronique portable pour la détermination d'une position actuelle, une accélération actuelle et une orientation actuelle du dispositif électronique portable ; et
la comparaison de la position actuelle, de l'accélération actuelle et de l'orientation actuelle du dispositif électronique portable à une position précédente, une accélération précédente et une orientation précédente du dispositif électronique portable, respectivement, pour suivre le mouvement du dispositif électronique portable.

3. Procédé (400) selon la revendication 2, dans lequel le dispositif électronique portable est un contrôleur portable couplé de manière fonctionnelle au dispositif électronique monté sur la tête.

4. Procédé (400) selon la revendication 1, dans lequel le mouvement de suivi du dispositif électronique portable inclut :
l'initialisation d'une position entre une face avant du dispositif électronique monté sur la tête et une face avant du dispositif électronique portable et la capture d'une image initiale de la face avant du dispositif électronique monté sur la tête ;
la capture d'une image actuelle de la face avant du dispositif électronique monté sur la tête avec une caméra avant de l'appareil électronique portable ;
la comparaison de l'image actuelle de la face avant du dispositif électronique monté sur la tête à l'image initiale de la face avant au dispositif électronique monté sur la tête ; et
la détermination d'une position et d'une orientation du dispositif électronique portable par rapport au dispositif électronique monté sur la tête, en fonction de la comparaison.

5. Procédé (400) selon la revendication 4, dans lequel la comparaison de l'image actuelle de la face avant du dispositif électronique monté sur la tête à l'image initiale de la face avant du dispositif électronique monté sur la tête inclut :
la comparaison d'un contour initial du dispositif électronique monté sur la tête détecté dans l'image initiale vers un contour actuel du dispositif électronique monté sur la tête détecté dans l'image actuelle ; et
la détermination d'au moins un changement de la position ou un changement de l'orientation du dispositif électronique portable par rapport au dispositif électronique monté sur la tête, basé sur la comparaison.

6. Procédé (400) selon la revendication 4, dans lequel le mouvement de suivi du dispositif électronique portable inclut également :
la combinaison, par un processeur du dispositif électronique monté sur la tête, de la position déterminée du dispositif électronique portable par rapport au dispositif électronique monté sur la tête, avec des données d'accélération du dispositif électronique portable à partir d'un accéléromètre du dispositif électronique portable et des données d'orientation du dispositif électronique portable à partir d'un gyroscope du dispositif électronique portable pour la détermination d'une position, d'une accélération et d'une orientation actuelles du dispositif électronique portable ; et
la comparaison de la position, l'accélération et l'orientation actuelles du dispositif électronique portable à une position, une accélération et une orientation précédentes du dispositif électronique portable pour suivre le mouvement du dispositif électronique portable.

7. Procédé (400) selon la revendication 1, dans lequel le mouvement de suivi du dispositif électronique portable inclut :
l'initialisation d'une position entre une face avant du dispositif électronique monté sur la tête et une face avant du dispositif électronique portable et la capture d'une image initiale de la face avant du dispositif électronique portable ;
la capture d'une image actuelle de la face avant du dispositif électronique portable avec une caméra du dispositif électronique monté sur la tête ;
la comparaison de l'image actuelle de la face avant du dispositif électronique portable à l'image initiale de la face avant du dispositif électronique portable ; et
la détermination d'une position et d'une orientation du dispositif électronique portable par rapport au dispositif électronique monté sur la tête, en fonction de la comparaison.

8. Procédé (400) selon la revendication 7, dans lequel la comparaison de l'image actuelle de la face avant du dispositif électronique portable à l'image initiale de la face avant du dispositif électronique portable inclut :
la comparaison d'un contour initial du dispositif électronique portable détecté dans l'image initiale à un contour actuel du dispositif électronique portable détecté dans l'image actuelle ; et
la détermination d'au moins un changement de la position ou un changement de l'orientation du dispositif électronique portable par rapport au dispositif électronique monté sur la tête, basé sur la comparaison.

9. Système (300), comprenant :
un dispositif électronique portable (202)
un dispositif électronique monté sur la tête (100, 200), incluant :
un logement (110) ;
un affichage (140) et des lentilles (150) inclus dans le logement (110) ;
une caméra de profondeur (180) sur le logement (110), où la caméra de profondeur est configurée pour générer des signaux infrarouges, et pour recueillir les données de position liées au dispositif électronique portable (202) couplé de manière opérable au dispositif électronique monté sur la tête (100, 200), en fonction des réponses aux signaux infrarouges générés par la caméra de profondeur (180) du dispositif électronique monté sur la tête (100, 200) ; et
un processeur (290) contrôlant le fonctionnement du dispositif électronique monté sur la tête (100, 200),
dans lequel le dispositif électronique monté sur la tête (100, 200) est configuré pour :
la réception, du dispositif électronique portable (202), des données d'image caractérisant le dispositif électronique monté sur la tête (100, 200) capturé par une caméra du dispositif électronique portable ;
la réception des données d'accélération, collectées par un accéléromètre (204A) du dispositif électronique portable (202) et des données d'orientation, collectées par un gyroscope (204B) du dispositif électronique portable (202), du dispositif électronique portable (202) lié au mouvement du dispositif électronique portable (202), et
le traitement des données de position collectées par la caméra de profondeur (180), ainsi que les données d'accélération et les données d'orientation reçues du dispositif électronique portable (202), afin de déterminer une position de six degrés de liberté (6 DOF) du dispositif électronique portable (202), incluant l'utilisation des données d'image reçues du dispositif électronique portable (202) afin de réduire un espace de recherche pour localiser le dispositif électronique portable par rapport au dispositif électronique monté sur la tête (100, 200).

10. Système (300) selon la revendication 9, dans lequel le processeur (290) est configuré pour la comparaison d'une position actuelle, une accélération actuelle et une orientation actuelle du dispositif électronique portable (202) à une position précédente, une accélération précédente et une orientation précédente, respectivement, du dispositif électronique portable (202), et pour suivre le mouvement du dispositif électronique portable (202) sur la base de la comparaison.

11. Système (300) selon la revendication 9, dans lequel le processeur (290) est configuré pour :
la comparaison d'une image initiale d'une face avant du dispositif électronique monté sur la tête (100, 200), capturée par le dispositif électronique portable (202), à une image actuelle de la face avant du dispositif électronique monté sur la tête (100, 200), capturée par le dispositif électronique portable (202), et
la détermination d'une position et d'une orientation du dispositif électronique portable (202) par rapport au dispositif électronique monté sur la tête (100, 200) en fonction de la comparaison.

12. Système (300) selon la revendication 11, dans lequel, en comparant l'image capturée de la face avant du dispositif d'affichage monté sur la tête (100, 200) à l'image initiale de la face avant du dispositif électronique monté sur la tête (100, 200), le processeur (290) est configuré pour :
la comparaison d'un contour initial du dispositif électronique monté sur la tête (100, 200) détecté dans l'image initiale à un contour actuel du dispositif électronique monté sur la tête (100, 200) détecté dans l'image capturée ; et
la détermination d'au moins l'un parmi un changement en position ou un changement dans l'orientation du dispositif électronique portable (202) par rapport au dispositif électronique monté sur la tête (100, 200) en fonction de la comparaison.

13. Système (300) selon la revendication 9, dans lequel le processeur (290) est configuré pour
la comparaison d'une image initiale d'une face avant du dispositif électronique portable (202), capturée par le dispositif électronique monté sur la tête (100, 200), à une image actuelle de la face avant du dispositif électronique portable (202), capturée par le dispositif électronique monté sur la tête (100, 200), et
la détermination d'une position et d'une orientation du dispositif électronique portable (202) par rapport au dispositif électronique monté sur la tête (100, 200) en fonction de la comparaison.

14. Système (300) selon la revendication 13, dans lequel, en comparant l'image capturée de la face avant du dispositif électronique portable (202) à l'image initiale de la face avant du dispositif électronique portable (202), le processeur (290) est configuré pour :
la comparaison d'un contour initial du dispositif électronique portable (202) détecté dans l'image initiale à un contour actuel du dispositif électronique portable (202) détecté dans l'image capturée ; et
la détermination d'au moins l'un parmi un changement en position ou un changement dans l'orientation du dispositif électronique portable (202) par rapport au dispositif électronique monté sur la tête (100, 200) en fonction de la comparaison.

15. Support lisible par ordinateur non transitoire (804) contenant des instructions qui, lorsqu'elles sont exécutées par un processeur (802) d'un dispositif informatique configuré comme dispositif d'affichage monté sur la tête (100, 200), amènent le dispositif informatique à exécuter le procédé selon l'une quelconque des revendications 1 à 8.
